**Europäisches Patentamt**

**European Patent Office**

**Office européen des brevets**

(19)

(11) Numéro de publication: **0 165 879**

**B1**

(12) # FASCICULE DE BREVET EUROPÉEN

(45) Date de publication du fascicule du brevet:
**18.05.88**

(51) Int. Cl.⁴: **F 16 J 15/12**

(21) Numéro de dépôt: **85420074.8**

(22) Date de dépôt: **25.04.85**

(54) Joint de culasse.

(30) Priorité: **26.04.84 FR 8406908**

(43) Date de publication de la demande:
**27.12.85 Bulletin 85/52**

(45) Mention de la délivrance du brevet:
**18.05.88 Bulletin 88/20**

(84) Etats contractants désignés:
**AT BE CH DE GB IT LI LU NL SE**

(56) Documents cité:
**DE-A-3 001 599**
**FR-A-1 458 131**
**FR-A-2 446 970**

(73) Titulaire: **CURTY, 25, rue Aristide Briand, Saint-Priest, Rhône (FR)**

(72) Inventeur: **Lambert, Georges, 165, avenue Sidoine Appolinaire, F-69009 Lyon (FR)**
Inventeur: **Ferre, Guy, 4, Boulevard Edouard Herriot, F-69800 Saint- Priest (FR)**

(74) Mandataire: **Maureau, Pierre, Cabinet GERMAIN & MAUREAU B.P. 11, F-69392 Lyon Cedex 03 (FR)**

## Description

La présente invention a pour objet un joint de culasse.

Un joint de culasse comprend généralement une partie centrale présentant plusieurs ouvertures correspondant chacune à l'emplacement d'une chambre de combustion, ainsi qu'un certain nombre de passages, disposés latéralement, servant à la circulation des liquides de refroidissement et de lubrification, et à la traversée des goujons de serrage. Un tel joint de culasse est connu du DE-A-3 001 599.

Il est également connu, notamment dans le cas de moteurs de poids lourds, d'équiper le bloc moteur de plusieurs culasses dont chacune comprend des ouvertures correspondant aux emplacements respectifs d'une chambre de combustion et des passages correspondants des liquides de refroidissement et de lubrification. A chaque culasse est associé un joint de culasse comportant une partie centrale présentant une ouverture correspondant à la chambre de combustion considérée, et deux parties en débord dans lesquelles sont ménagées des ouvertures pour le passage des liquides de refroidissement et de lubrification, ainsi que pour les goujons de serrage de la culasse.

Cette solution est intéressante car permettant à un constructeur d'équiper différents types de moteurs à six ou huit cylindres, en ligne ou en V avec les mêmes culasses. Il en résulte une diminution du prix de revient en raison de la taille des pièces qui sont petites par rapport à celles mises en oeuvre dans le cas d'une culasse unique. En outre, cette solution permet d'abaisser le stock du constructeur puisque celui-ci dispose d'un type unique de joints de culasses et de culasses pour plusieurs moteurs. Enfin, en cas d'incident sur un cylindre, il suffit de démonter une seule culasse, ce qui constitue un facteur de simplicité, de rapidité, et par suite d'économie.

Généralement, chaque joint de culasse pour moteur à une ou plusieurs culasses comprend une âme constituée par une plaque métallique à laquelle sont associés un anneau de feu entourant la ou les ouvertures centrales et réalisant l'étanchéité aux gaz, et des cordons d'élastomère surmoulés sur la plaque et entourant les ouvertures des passages des liquides de refroidissement et de lubrification. Afin que le joint de culasse, qui est un joint sans amiante, possède une bonne résistance aux gaz, il convient que la plaque centrale soit réalisée en un métal de bonne qualité.

Le surmoulage des cordons d'élastomère est réalisé à l'intérieur de moules de dimensions relativement importantes, puisqu'ils doivent contenir la totalité de l'âme de chaque joint y compris la partie dans laquelle sont ménagées les ouvertures centrales. Ce surmoulage est réalisé par amenée centrale de matière et distribution de celle-ci par des ramifications jusqu'aux emplacements ou doivent être formés les joints. Il résulte de cet agencement une perte importante de matière première. En outre, la fermeture d'un moule étant réalisée à l'aide d'une presse, une seule presse ne peut convenir que pour la fermeture d'un nombre restreint de moules compte tenu des tailles importantes de ces derniers. Cette technique nécessite donc un investissement important en presses. Enfin, en raison de la proximité entre les anneaux de feu et certains cordons d'étanchéité aux liquides, ces derniers subissent, par conduction thermique, un échauffement important nécessitant leur réalisation en un élastomère possèdant une bonne résistance à des températures élevées, supérieures à 250°C. Or, il est connu que de tels élastomères sont très coûteux et nécessitent des temps de polymérisation importants conduisant à des cadences de production peu élevées.

La présente invention vise à remédier à ces inconvénients en fournissant un joint de culasse, qui soit de réalisation simple et économique et qui possède d'excellentes performances.

A cet effet, le joint qu'elle concerne est réalisé en trois parties indépendantes et équipées de leurs moyens d'étanchéité respectifs indépendamment les unes des autres, à savoir une partie principale dans laquelle est ménagée l'ouverture correspondant à la chambre de combustion et deux parties latérales comprenant des ouvertures de passage des fluides de refroidissement et de lubrification équipées de cordons d'étanchéité, les deux parties latérales étant fixées sur la partie centrale après avoir été équipées des cordons d'étanchéité.

Cette solution est très intéressante car le moulage des cordons d'élastomère est réalisé sur des pièces de petite taille, assurant ainsi une diminution du coût de l'opération de moulage par diminution de la taille des moules, par diminution des pertes de matière première et par augmentation du nombre de moules pouvant être associés à une même presse.

Compte tenu du fait que le joint est réalisé en trois parties, l'âme de la partie centrale peut être réalisée en un métal différent et possèdant des caractéristiques supérieures à celle du métal constitutif de l'âme des parties latérales. Il est ainsi possible de réaliser une autre économie au niveau des matériaux mis en oeuvre pour l'âme du joint.

La fixation des deux parties latérales du joint sur la partie centrale peut être réalisée par différentes techniques telles que soudage, collage ou agrafage.

Selon une caractéristique avantageuse de ce joint, la fixation de chaque partie latérale sur la partie centrale est réalisée par points avec contact entre les deux parties considérées seulement au niveau de leurs points de fixation.

Il résulte d'un tel agencement qu'il existe une solution de continuité importante entre chaque partie latérale et la partie centrale du joint, ce qui limite la transmission de chaleur par conduction entre l'anneau de feu et les parties latérales. L'élévation de température étant très sensiblement inférieure à celle mesurée dans le cas traditionnel, il est possible de réaliser les cordons d'étanchéité aux fluides dans des élastomères résistant à des températures inférieures à celles traditionnelles. Or, ces élastomères sont moins coûteux et polymérisent plus vite que ceux utilisés habituellement, ce qui constitue un facteur d'économie supplémentaire.

Selon une forme d'exécution, la partie centrale est prolongée par des pattes servant à l'appui et à la fixation des deux parties latérales. Ces pattes prolongeant la partie centrale peuvent être constituées par des prolongements de l'anneau de feu, qui est lui-même indépendant ou obtenu par pliage de l'âme de la partie centrale du joint.

De toute façon, l'invention sera bien comprise à l'aide de la description qui suit en référence au dessin schématique annexé, représentant, à titre d'exemples non limitatifs, deux formes d'exécution de ce joint:

Figure 1 est une vue en plan d'un joint conforme à l'invention ;

Figures 2 et 3 en sont deux vues partielles et à échelle agrandie, respectivement, selon les lignes 2-2 et 3-3 de figure 1;

Figure 4 est une vue en coupe similaire à figure 3 représentant une variante d'exécution de ce joint dans lequel l'anneau de feu est réalisé différemment.

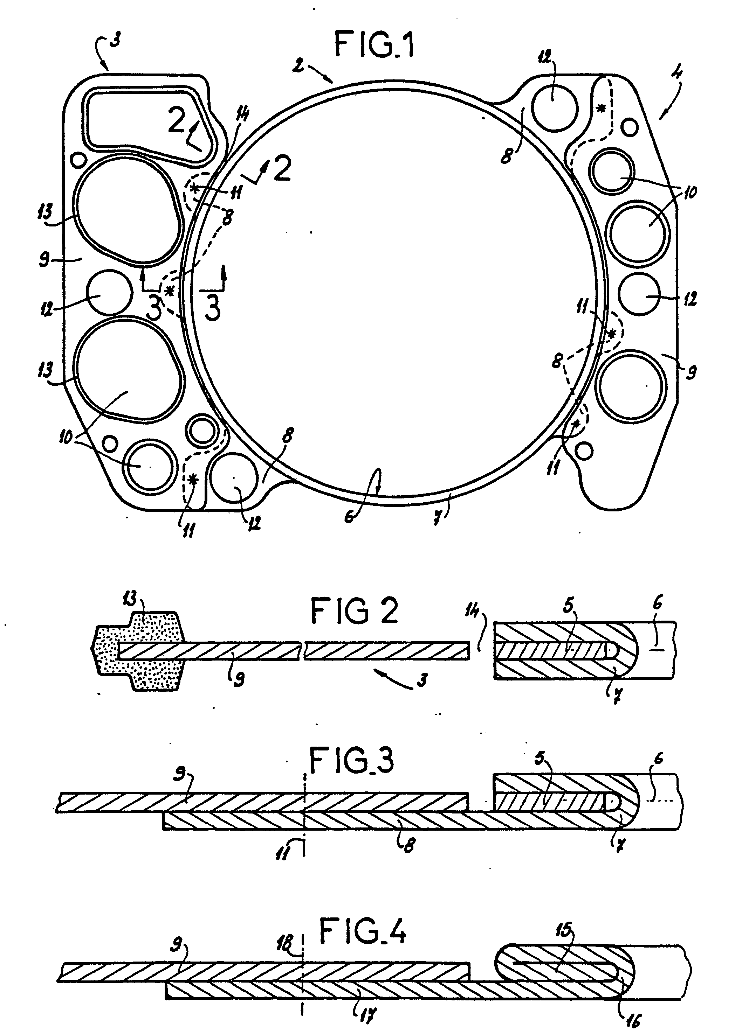

Le joint de culasse pour moteur à plusieurs culasses, représenté à la figure 1, comprend une partie centrale (2) et deux parties latérales, respectivement (3) et (4). La partie centrale (2) comprend une âme constituée par une plaque métallique (5) dans laquelle est ménagée une ouverture (6) correspondant à une chambre de combustion du moteur. L'ouverture (6) est délimitée par un anneau de feu (7) constitué par une pièce métallique sertie sur la plaque (5). Comme montré au dessin, l'une des ailes de l'anneau de feu (7) est prolongée latéralement par six pattes (8).

Chacune des deux parties latérales (3, 4) comprend une âme constituée par une plaque métallique (9) dans laquelle sont ménagées des ouvertures (10) pour les passages de liquides de lubrification et de refroidissement, et (12) pour le passage des goujons de serrage de la culasse. L'étanchéité aux liquides au niveau des ouvertures (10) est réalisée par l'intermédiaire de cordons d'élastomère (13) surmoulés. Comme montré au dessin, chaque partie latérale (3) prend appui sur les pattes (8) prolongeant la partie centrale et est fixée sur celle-ci par des points de soudure (11). Il est à noter que le contact entre chaque partie latérale (3, 4) et la partie centrale est réalisé uniquement au niveau des pattes, les figures 1 et 2 montrant clairement l'existence d'une solution de continuité (14), qui peut être de l'ordre de 0,5 millimètres entre la partie centrale et chaque partie latérale. Il en résulte un abaissement de la transmission de chaleur par conductibilité de l'anneau de feu vers chaque partie latérale, évitant les dégradations des cordons d'étanchéité (13).

Dans la forme d'exécution représentée à la figure 1, l'une des pattes (8), associée à l'anneau de feu (7), présente un orifice (12) pour le passage d'un goujon de serrage de la culasse permettant à la fois son bon positionnement et sa fixation sur la culasse.

Dans la forme d'exécution représentée à la figure 4, l'âme (15) de la partie centrale du joint présente plusieurs plis successifs assurant la formation simultanée de l'anneau de feu (16) qui présente lui-même des pattes (17) en saillie permettant sa fixation par des points de soudure (18) sur les parties latérales (3, 4).

Comme il ressort de ce qui précède, l'invention apporte une grande amélioration à la technique existante en fournissant un joint de culasse pour moteur à plusieurs culasses, réalisé sans amiante, dont les différentes parties principales sont obtenues indépendamment les unes des autres, de façon simple, et possédant une excellente fiabilité en raison notamment de la limitation de la transmission de chaleur des anneaux de feu vers les cordons d'étanchéité des passages de liquides.

Comme il va de soi, l'invention ne se limite pas aux seules formes d'exécution de ce joint de culasse, décrites ci-dessus à titre d' exemples; elle en embrasse, au contraire, toutes les variantes de réalisation.

C'est ainsi notamment que le nombre de points de fixation et le mode même de fixation des parties latérales sur la partie centrale pourraient être différents, ou que le joint de culasse pourrait être destiné à l'équipement d'un moteur à une seule culasse, la partie centrale comportant les ouvertures correspondant aux emplacements des chambres de combustion, et les parties latérales comportant les ouvertures pour le passage des liquides de refroidissement et de lubrification, sans que l'on sorte pour autant du cadre de l'invention.

**Revendications**

1. Joint de culasse pour moteur à une ou plusieurs culasses, du type comprenant une partie centrale (2) dans laquelle sont ménagées des ouvertures dont le nombre et la position correspondent à ceux des chambres de combustion, entourée par un anneau de feu (7), deux parties latérales (3, 4) comportant des ouvertures pour le passage des liquides de refroidissement et de lubrification, entourées par des cordons d'étanchéité en polymère, caractérisé en ce qu'il est réalisé en trois parties indépendantes et équipées de leurs moyens d'étanchéité respectifs indépendamment les unes des autres, à savoir une partie principale (2) dans laquelle est ménagée l'ouverture (6) correspondant à la chambre de combustion et deux parties latérales (3, 4) comprenant des ouvertures (10) de passage des fluides de refroidissement et de lubrification équipées de cordons d'étanchéité (13), les deux parties latérales (3, 4) étant fixées sur la partie centrale après avoir été équipées des cordons d'étanchéité.

2. Joint de culasse selon la revendication 1, caractérisé en ce que la fixation de chaque partie latérale (3, 4) sur la partie centrale (2) est réalisée par points avec contact entre les deux parties considérées seulement au niveau de leurs points de fixation, et ménagement d'interstices entre les points de contact.

3. Joint de culasse selon la revendication 2, caractérisé en ce que la partie centrale (2) est prolongée par des pattes (8) servant à l'appui et à la fixation des deux parties latérales (3, 4).

**Patentansprüche**

1. Zylinderkopfdichtung für einen Motor mit einem oder mehreren Zylinderköpfen mit einem Mittelteil (2) mit Öffnungen, deren Anzahl und Lage derjenigen der Verbrennungsräume entspricht und das von einem Folienring (7) umgeben ist, und mit zwei Seitenteilen (3, 4) mit Öffnungen für den Durchtritt einer Kühlflüssigkeit bzw. Schmierflüssigkeit, umgeben mit Abdichtungsschnüren aus einem Polymer, dadurch gekennzeichnet, daß die Zylinderkopfdichtung aus drei unabhängigen Teilen besteht, die Abdichtungsmittel aufweisen, die jeweils voneinander unabhängig sind, nämlich einem Hauptteil (2), in dem sich die der Verbrennungskammer entsprechende Öffnung (6) befindet, und zwei Seitenteilen (3, 4), die die Öffnungen (10) für die Kühlflüssigkeit bzw. für die Schmierflüssigkeit aufweisen und die Abdichtungsschnüre (13) haben, wobei die beiden Seitenteile ( 3, 4) am Mittelteil befestigt worden sind, nachdem sie mit den Abdichtungsschnüren versehen worden sind.

2. Zylinderkopfdichtung nach Anspruch 1, dadurch gekennzeichnet, daß die Seitenteile (3, 4) über Punkte mit dem Mittelteil (2) verbunden sind, wobei die Teile nur über die Befestigungspunkte miteinander verbunden sind, zwischen denen Spalte ausgebildet sind.

3. Zylinderkopfdichtung nach Anspruch 2, dadurch gekennzeichnet, daß das Mittelteil (2) über Laschen (8) verlängert ist, die als Stütze und Befestigung für die beiden Seitenteile (3,4) dienen.

**Claims**

1. A cylinder head gasket for an engine having one or more cylinder heads, of the type including a central part (2) in which are formed openings surrounded by fire rings (7), and of which the number and the positions correspond to those of the combustion chambers, and two lateral parts (3, 4) having openings for the passage of cooling and lubricating liquids, surrounded by sealing edgings of polymer, characterised in that it is made in three independent parts provided with their respective sealing means independently of one another, that is to say a main part (2) in which is formed the opening (6) corresponding to the combustion chamber and two lateral parts (3, 4) including openings (10) for the passage of cooling and lubricating fluids provided with sealing edgings (13), the two lateral parts (3, 4) being secured to the central part after having been equipped with the sealing edgings.

2. A cylinder head gasket according to Claim 1, characterised in that the securing of each lateral part (3, 4) to the central part (2) is effected by spots with contact between the two relevant parts only in the area of their securing points and the formation of interstices between the points of contact.

3. A cylinder head gasket according to Claim 2, characterised in that the central part (2) is extended by lugs (8) acting as a bearing for and for securing the two lateral parts (3, 4)

0 165 879

FIG.1

FIG 2

FIG.3

FIG.4